(19) Europäisches Patentamt
European Patent Office
Office européen des brevets

(11) EP 2 163 379 A1

(12) EUROPEAN PATENT APPLICATION
published in accordance with Art. 153(4) EPC

(43) Date of publication:
17.03.2010 Bulletin 2010/11

(51) Int Cl.:
B32B 27/00 (2006.01)      B65D 65/40 (2006.01)
B65D 75/36 (2006.01)      B65D 83/04 (2006.01)

(21) Application number: 08777218.2

(22) Date of filing: 13.06.2008

(86) International application number:
PCT/JP2008/060907

(87) International publication number:
WO 2008/156039 (24.12.2008 Gazette 2008/52)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 20.06.2007 JP 2007162620

(71) Applicants:
• Shionogi&Co., Ltd.
Osaka-shi
Osaka 541-0045 (JP)
• Taisei Kako Co., Ltd.
Kita-ku
Osaka-shi
Osaka 531-0072 (JP)

(72) Inventors:
• TAMURA, Takumi
Amagasaki-shi
Hyogo 660-0813 (JP)
• HIRAMOTO, Shinji
Amagasaki-shi
Hyogo 660-0813 (JP)
• HAMAMOTO, Keiji
Ibaraki-shi
Osaka 567-0054 (JP)
• TSUJI, Takuya
Ibaraki-shi
Osaka 567-0054 (JP)

(74) Representative: Matthews, Derek Peter
Dehns
St Bride's House
10 Salisbury Square
London
EC4Y 8JD (GB)

(54) **RESIN LAMINATED FILM FOR FORMING BLISTER PACK AND BLISTER PACK**

(57)    Blister packaging multilayer resin films and blister packages of the invention achieve a lower oxygen permeability than possible heretofore.

A blister packaging multilayer resin film of the invention is used to produce a blister package in which an item is sealed between a support substrate and the multilayer resin film, wherein the multilayer resin film includes an oxygen barrier layer that is arranged on a side of the multilayer resin film which side faces the support substrate, and a moisture proof layer that is arranged on a side of the oxygen barrier layer which side does not face the support substrate.

[Fig. 2]

## Description

FIELD OF THE INVENTION

The present invention relates to blister packaging multilayer resin films and blister packages. In more detail, the invention relates to blister packaging multilayer resin films and blister packages therewith having a lower oxygen permeability than achieved heretofore.

BACKGROUND OF THE INVENTION

Blister packages have been conventionally used to package drugs such as tablets and capsules, foods, toys and other items.

In particular, blister packages such as press-through packages (hereinafter, also PTP) are frequently used to package pharmaceutical tablets or capsules. In this type of blister packages, tablets or capsules are placed in a number of pockets that are thermoformed on the surface of a band-shaped resin film, and a sealing foil such as an aluminum foil is thermally bonded on the back surface of the resin film thereby to seal the tables or capsules

Various properties required for the blister packages including the press-through packages have been studied (see Patent Document 1). However, oxygen barrier properties of the blister packages have not been addressed sufficiently.

Blister packages with low oxygen barrier properties have often caused problems in packaging oxygen-sensitive drugs or the like. However, there have been no in-depth studies of oxygen barrier properties of multilayer resin films for forming the blister packages such as the press-through packages. Accordingly, there has been a need for multilayer resin films for blister packages including press-through packages that have excellent oxygen barrier properties.

Strip packages have higher content preservation properties (light shielding properties, moisture proof properties, oxygen barrier properties) and higher convenience than the blister packages such as the press-through packages. In the strip packages, however, it is difficult to recognize the color, identification number, breakage or cracks of the content because the content is sandwiched between cellophane/Al (aluminum)/PE or PET/Al/CPP multilayer films. Therefore, the strip packages are unsatisfactory for both manufacturers and consumers.

Patent Document 1: JP-A-2006-63231

DISCLOSURE OF THE INVENTION

It is an object of the invention to provide blister packaging multilayer resin films and blister packages that achieve a lower oxygen permeability than possible heretofore and have excellent moisture proof properties.

The present inventors studied diligently to achieve the above object. They have then found that blister packaging multilayer resin films having an oxygen barrier layer and a moisture proof layer show a lower oxygen permeability than achieved heretofore and also have excellent moisture proof properties. The present invention has been completed based on the finding.

The present invention is concerned with the following (1) to (20).

(1) A blister packaging multilayer resin film used to produce a blister package in which an item is sealed between a support substrate and the multilayer resin film, wherein:

the multilayer resin film comprises an oxygen barrier layer that is arranged on a side of the multilayer resin film which side faces the support substrate, and
a moisture proof layer that is arranged on a side of the oxygen barrier layer which side does not face the support substrate.

(2) A blister packaging multilayer resin film used to produce a blister package in which an item is sealed between a support substrate and the multilayer resin film, wherein:

the multilayer resin film comprises an oxygen barrier layer that is arranged on a side of the multilayer resin film which side faces the support substrate, and
a moisture proof layer that is arranged on a side of the oxygen barrier layer which side does not face the support substrate; and
the multilayer resin film has an oxygen permeability of not more than 15 $cm^3/m^2 \cdot day \cdot atm$, the oxygen permeating from a side of the multilayer resin film not facing the support substrate (an outer side) to a side thereof facing the support substrate (an inner side), as measured under conditions in which the temperature and humidity are 40°C and 0% RH on the side of the multilayer resin film facing the support substrate (the inner side) and the temperature and humidity are 40°C and 75% RH on the side not facing the support substrate (the outer side) .

(3) The blister packaging multilayer resin film described in (1) or (2) above, wherein the oxygen barrier layer comprises at least one layer selected from the group consisting of ethylene/vinyl alcohol copolymer layers and polyacrylonitrile layers.

(4) The blister packaging multilayer resin film described in any one of (1) to (3) above, wherein the moisture proof layer comprises at least one layer selected from the group consisting of petroleum resin-modified polypropylene layers, cyclic olefin resin layers, 100-400 $\mu$m thick polypropylene layers and polychlorotrifluoroethylene layers.

(5) The blister packaging multilayer resin film described in any one of (1) to (4) above, wherein the oxygen barrier layer is formed of an oxygen barrier resin film and the moisture proof layer is formed of a moisture proof resin film.

(6) The blister packaging multilayer resin film described in (5) above, wherein the oxygen barrier resin film forming the oxygen barrier layer has an oxygen permeability of not more than 100 cm$^3$/m$^2$·day·atm as measured at 40°C and 75% RH, and the moisture proof resin film forming the moisture proof layer has a moisture permeability of not more than 1.0 g/m$^2$·day as measured at 40°C and 90% RH.

(7) The blister packaging multilayer resin film described in (5) or (6) above, wherein the oxygen barrier resin film comprises at least one resin film selected from the group consisting of polyolefin layer/ethylene vinyl alcohol copolymer layer/polyolefin layer multilayer films, polyacrylonitrile layer/adhesive layer/polyolefin layer multilayer films, polyolefin layer/adhesive layer/polyacrylonitrile layer/adhesive layer/polyolefin layer multilayer films, and polyacrylonitrile layer/adhesive layer/polyolefin layer/ethylene vinyl alcohol copolymer layer/polyolefin layer multilayer films.

(8) The blister packaging multilayer resin film described in any one of (5) to (7) above, wherein the moisture proof resin film comprises at least one film selected from the group consisting of polypropylene layer/petroleum resin-modified polypropylene layer/polypropylene layer multilayer films, polypropylene layer/adhesive layer/cyclic olefin resin layer multilayer films, 100-400 $\mu$m thick polypropylene single layer films, polychlorotrifluoroethylene layer/adhesive layer/polypropylene layer/petroleum resin-modified polypropylene layer/polypropylene layer multilayer films, polychlorotrifluoroethylene layer/adhesive layer/polypropylene layer/adhesive layer/cyclic olefin resin layer multilayer films, polychlorotrifluoroethylene layer/adhesive layer/cyclic olefin resin layer multilayer films, polychlorotrifluoroethylene layer/polypropylene layer multilayer films, polypropylene layer/adhesive layer/polychlorotrifluoroethylene layer/adhesive layer/polypropylene layer multilayer films, and polychlorotrifluoroethylene layer/adhesive layer/polypropylene layer multilayer films.

(9) The blister packaging multilayer resin film described in any one of (1) to (8) above, wherein the oxygen barrier layer has a thickness of 1 to 100 $\mu$m, the moisture proof layer has a thickness of 100 to 400 $\mu$m, and the thickness of the blister packaging multilayer resin film is in the range of 200 to 500 $\mu$m.

(10) The blister packaging multilayer resin film described in any one of (1) to (9) above, which further comprises an ultraviolet absorbing layer.

(11) The blister packaging multilayer resin film described in any one of (1) to (10) above, wherein the moisture proof layer and/or the oxygen barrier layer contains an ultraviolet absorber.

(12) The blister packaging multilayer resin film described in any one of (1) to (11) above, which further comprises a light shielding layer.

(13) The blister packaging multilayer resin film described in any one of (1) to (12) above, wherein the moisture proof layer and/or the oxygen barrier layer contains a light shielding material.

(14) The blister packaging multilayer resin film described in any one of (1) to (13) above, wherein the blister package is a press-through package.

(15) A blister package comprising a support substrate and the multilayer resin film described in any one of (1) to (14) above, the blister package having a pocket for sealing an item between the support substrate and the multilayer resin film, the support substrate and the multilayer resin film being fusion bonded together such that the oxygen barrier layer is arranged on a side of the multilayer resin film which side faces the support substrate, and the moisture proof layer is arranged on a side which does not face the support substrate.

(16) The blister package described in (15) above, wherein the support substrate is an aluminum metal foil.

(17) The blister package described in (15) or (16) above, wherein the support substrate has a heat sealable resin layer on a joint surface with the multilayer resin film.

(18) The blister package described in any one of (15) to (17) above, which is a press-through package.

(19) The blister package described in any one of (15) to (18) above, wherein an item is sealed in the package.

(20) In blister packages that comprise a support substrate and a multilayer resin film comprising an oxygen barrier layer and a moisture proof layer and have a pocket for sealing an item between the support substrate and the multilayer resin film, a method of inhibiting the permeation of oxygen into the blister packages by arranging the oxygen barrier layer on a side of the multilayer resin film which side faces the support substrate, and the moisture proof layer on a side of the oxygen barrier layer which side does not face the support substrate.

ADVANTAGEOUS EFFECTS OF THE INVENTION

The blister packages of the present invention permit easy recognition of the color, identification number, breakage or cracks of the content and have a lower oxygen permeability than achieved heretofore and also excellent moisture proof properties. The blister packaging multilayer resin films of the invention can form such blister packages.

BRIEF DESCRIPTION OF THE DRAWINGS

Fig. 1 is a view showing an embodiment of a method of manufacturing blister packages by a preheating plug-assist pressure forming process.
Fig. 2 is a schematic view of a blister package.

DESCRIPTION OF NUMERALS

2       raw film roll4
4       accumulator
6       contact heating plate
8       mold
10      plug
12      part feeder
14      aluminum foil
16      fusion bonding roll
18      mark stamping unit
20      cutting/punching unit
22      belt conveyer
24      oxygen barrier layer
26      moisture proof layer
28      adhesive layer
30      support substrate

PREFERRED EMBODIMENTS FOR CARRYING OUT THE INVENTION

The present invention will be described in detail hereinbelow.
In the specification, the blister packaging multilayer resin films may be simply referred to as the multilayer resin films.

(Blister packaging multilayer resin films)

The blister packaging multilayer resin film of the invention is used to produce a blister package in which an item is sealed between a support substrate and the multilayer resin film. The multilayer resin film includes an oxygen barrier layer that is arranged on a side of the multilayer resin film which side faces the support substrate, and a moisture proof layer that is arranged on a side of the oxygen barrier layer which side does not face the support substrate. The multilayer resin film usually has an oxygen permeability of not more than 15 $cm^3/m^2 \cdot day \cdot atm$, the oxygen permeating from a side of the multilayer resin film not facing the support substrate (an outer side) to a side thereof facing the support substrate (an inner side), as measured under conditions in which the temperature and humidity are 40°C and 0% RH on the side of the multilayer resin film facing the support substrate (the inner side) and the temperature and humidity are 40°C and 75% RH on the side not facing the support substrate (the outer side).

(Oxygen barrier layer)

The blister packaging multilayer resin films of the invention have an oxygen barrier layer. The oxygen barrier layer is arranged on a side of the multilayer resin film such that it faces a support substrate in the obtainable blister package.
The oxygen barrier layer preferably includes at least one layer selected from the group consisting of ethylene/vinyl alcohol copolymer layers and polyacrylonitrile layers. The oxygen barrier layer is preferably formed of an oxygen barrier resin film. The at least one layer selected from ethylene/vinyl alcohol copolymer layers and polyacrylonitrile layers generally has a thickness of 1 to 100 $\mu$m, and preferably 5 to 50 $\mu$m.

The oxygen barrier resin film preferably has an oxygen permeability of not more than 100 cm$^3$/m$^2$·day·atm, and more preferably not more than 50 cm$^3$/m$^2$·day·atm as measured at 40°C and 75% RH.

Lower oxygen permeability is more preferred, and the lower limit thereof is not particularly limited. But the oxygen permeability of general oxygen barrier resin films is usually not less than 1 cm$^3$/m$^2$·day·atm.

The oxygen barrier resin films having an oxygen permeability in the above range give oxygen barrier layers that show excellent oxygen barrier properties in the obtainable blister packages.

The oxygen barrier resin film may be a multilayer film including a plurality of resin layers or may be a single layer film. Multilayer films are preferable because single layer films may adhere to one another during the transportation from the manufacturer to cause problems in the laminating step, or the tight rolling of single layer films tends to cause troubles such as blocking and therefore long storage is difficult.

From the viewpoints of transportation and long-term storage, the oxygen barrier resin film preferably comprises at least one resin film selected from the group consisting of polyolefin layer/ethylene vinyl alcohol copolymer layer/ polyolefin layer multilayer films, polyacrylonitrile layer/adhesive layer/polyolefin layer multilayer films, polyolefin layer/ adhesive layer/polyacrylonitrile layer/adhesive layer/polyolefin layer multilayer films, and polyacrylonitrile layer/adhesive layer/polyolefin layer/ethylene vinyl alcohol copolymer layer/polyolefin layer multilayer films.

The oxygen barrier layer usually has a thickness of 1 to 100 $\mu$m, and preferably 30 to 80 $\mu$m. This thickness ensures that the layer shows excellent oxygen barrier properties.

(Moisture proof layer)

The blister packaging multilayer resin films of the invention have a moisture proof layer. The moisture proof layer is arranged on a side of the oxygen barrier layer such that it does not face a support substrate in the obtainable blister package.

The moisture proof layer preferably includes at least one layer selected from the group consisting of petroleum resin-modified polypropylene layers, cyclic olefin resin layers, 100-400 $\mu$m thick polypropylene layers and polychlorotrifluoroethylene layers. The moisture proof layer is preferably formed of a moisture proof resin film.

The moisture proof resin film preferably has a moisture permeability of not more than 1.0 g/m$^2$·day, and more preferably not more than 0.6 g/m$^2$·day as measured at 40°C and 90% RH.

Lower moisture permeability is more preferred, and the lower limit thereof is not particularly limited. But the moisture permeability of general ultrahigh moisture proof resin films is usually not less than 0.05 g/m$^2$·day,

The moisture proof layers that are formed of moisture proof resin films having a moisture permeability in the above range provide advantages that the blister packaging multilayer resin films in the obtainable blister packages permeate less water to the oxygen barrier layer that is arranged on a side facing the support substrate. In detail, many of the oxygen barrier resin films tend to lower oxygen barrier properties with increasing moisture, but the moisture proof layer reduces the amount of water reaching the oxygen barrier layer. The blister packaging multilayer resin films and blister packages having the films achieve excellent oxygen barrier properties as a result.

Because of the moisture proof layer in the multilayer resin films, blister packages having the multilayer resin films of the invention achieve excellent moisture proof properties compared to conventional blister packages.

The moisture proof resin film forming the moisture proof layer may be a multilayer film including a plurality of resin layers or may be a single layer film.

The moisture proof resin film preferably comprises at least one film selected from the group consisting of polypropylene layer/petroleum resin-modified polypropylene layer/polypropylene layer multilayer films, polypropylene layer/adhesive layer/cyclic olefin resin layer multilayer films, 100-400 $\mu$m thick polypropylene single layer films, polychlorotrifluoroethylene layer/adhesive layer/polypropylene layer/petroleum resin-modified polypropylene layer/polypropylene layer multilayer films, polychlorotrifluoroethylene layer/adhesive layer/polypropylene layer/adhesive layer/cyclic olefin resin layer multilayer films, polychlorotrifluoroethylene layer/adhesive layer/cyclic olefin resin layer multilayer films, polychlorotrifluoroethylene layer/polypropylene layer multilayer films, polypropylene layer/adhesive layer/polychlorotrifluoroethylene layer/adhesive layer/polypropylene layer multilayer films, and polychlorotrifluoroethylene layer/adhesive layer/polypropylene layer multilayer films. These multilayer films show good moisture proof properties even when used singly.

The moisture proof layer generally has a thickness of 100 to 400 $\mu$m, and preferably 250 to 350 $\mu$m. Excellent moisture proof properties (low moisture permeability) may be achieved in this range of thickness.

(Multilayer constitutions)

The blister packaging multilayer resin films of the invention have the oxygen barrier layer that is arranged on a side of the multilayer resin film which faces the support substrate, and the moisture proof layer that is arranged on a side of the oxygen barrier layer which does not face the support substrate. The multilayer constitutions of the blister packaging multilayer resin films are not particularly limited as long as the oxygen barrier layer is arranged on a side facing the support substrate and the moisture proof layer is arranged on a side of the oxygen barrier layer which does not face the support substrate. In a usual embodiment, the oxygen barrier layer and the moisture proof layer are bonded through an adhesive layer, or the oxygen barrier layer and the moisture proof layer are adjacent to each other. In particular, the oxygen barrier layer and the moisture proof layer are preferably bonded through an adhesive layer. That is, a usual multilayer constitution as viewed from the support substrate is oxygen barrier layer/adhesive layer/moisture proof layer or oxygen barrier layer/moisture proof layer. The oxygen barrier layer/adhesive layer/moisture proof layer constitution is more preferable. From the viewpoint of adhesion, the adhesive layer is preferably formed of a polyester adhesive.

Two or more oxygen barrier layers or moisture proof layers may be provided. Exemplary multilayer constitutions in this case as viewed from the support substrate include oxygen barrier layer/adhesive layer/moisture proof layer/adhesive layer/oxygen barrier layer, and oxygen barrier layer/adhesive layer/moisture proof layer/adhesive layer/oxygen barrier layer/adhesive layer/moisture proof layer.

The blister packaging multilayer resin films may further contain other layers (such as antistatic layers, ultraviolet absorbing layers or light shielding layers) in addition to the oxygen barrier layers, the moisture proof layers and the adhesive layers.

In an embodiment, an antistatic layer may be laminated on a side of the oxygen barrier layer which faces the support substrate (as viewed from the support substrate, antistatic layer/adhesive layer/oxygen barrier layer/adhesive layer/moisture proof layer). According to this embodiment, the pockets are prevented from attracting particles inside and permit easy recognition of the presence/absence of contents as well as cracks, breakage, color and identification number of the contents, and the presence of foreign matters.

An ultraviolet absorbing layer may be provided in the blister packaging multilayer resin films in any multilayer constitution without limitation. Exemplary multilayer constitutions in this case as viewed from the support substrate include ultraviolet absorbing layer/adhesive layer/oxygen barrier layer/adhesive layer/moisture proof layer, oxygen barrier layer/adhesive layer/ ultraviolet absorbing layer/adhesive layer/moisture proof layer, and oxygen barrier layer/adhesive layer/moisture proof layer/adhesive layer/ultraviolet absorbing layer.

The provision of the ultraviolet absorbing layers expands the applications of the blister packages to the packaging of ultraviolet -sensitive items (for example, items that are discolored or denatured by ultraviolet rays). Examples of the ultraviolet absorbing layers include films that are prepared by dry blending polypropylene with 0.01 to 5 wt% of an ultraviolet absorber as described later (based on 100 wt% of the ultraviolet absorbing layer) and immediately thereafter processing the blend by a T-die extrusion method, a blown-film extrusion method or a calendering method.

Instead of providing a separate ultraviolet absorbing layer, an ultraviolet absorber may be blended in the moisture proof layer or the oxygen barrier layer and equivalent effects may be thereby obtained. In such cases, the ultraviolet absorber may be contained in the moisture proof layer alone, the oxygen barrier layer alone, or both the moisture proof layer and the oxygen barrier layer. In an embodiment, a separate ultraviolet absorbing layer may be provided and additionally an ultraviolet absorber may be blended in the moisture proof layer or the oxygen barrier layer. Examples of the ultraviolet absorbers include those generally used in plastic forming such as benzotriazole ultraviolet absorber TINUVIN P (manufactured by Ciba Specialty Chemicals) and benzophenone ultraviolet absorber SEESORB 101 (manufactured by SHIPRO KASEI KAISHA, LTD.) . The ultraviolet absorbers may be used in an amount of 0.01 to 5 wt% (relative to 100 wt% of the layer including the ultraviolet absorber).

A light shielding layer may be provided in the blister packaging multilayer resin films in any multilayer constitution without limitation. Exemplary multilayer constitutions in this case as viewed from the support substrate include light shielding layer/adhesive layer/oxygen barrier layer/adhesive layer/moisture proof layer, oxygen barrier layer/adhesive layer/light shielding layer/adhesive layer/moisture proof layer, and oxygen barrier layer/adhesive layer/moisture proof layer/adhesive layer/light shielding layer.

The provision of the light shielding layers expands the applications of the blister packages to the packaging of items sensitive to visible light (for example, items that are discolored or denatured by visible light). Examples of the light shielding layers include films that are prepared by dry blending polypropylene with 0.01 to 5 wt% of a light shielding material as described later (based on 100 wt% of the light shielding layer) and immediately thereafter processing the blend by a T-die extrusion method, a blown-film extrusion method or a calendering method.

Instead of providing a separate light shielding layer, a light shielding material may be blended in the moisture proof layer, the oxygen barrier layer or the ultraviolet absorbing layer and equivalent effects may be thereby obtained. In such cases, the light shielding material may be contained in the moisture proof layer alone, the oxygen barrier layer alone, the ultraviolet absorbing layer alone, or two or more of these layers. In an embodiment, a separate light shielding layer may be provided and additionally a light shielding material may be blended in the moisture proof layer, the oxygen barrier layer or the ultraviolet absorbing layer. The light shielding materials are not particularly limited as long as they show good dispersibility in resins. Examples thereof include organic red pigments, organic red dyes, phthalocyanine green, titanium oxide, phthalocyanine blue, iron oxide and carbon black (CB). A single or two or more kinds of these materials may be used in various blending ratios to produce a red color, an orange color or other desired color. The light shielding materials may be used in an amount of 0.01 to 5 wt% (relative to 100 wt% of the layer including the light shielding material) .

In the manufacturing of blister packages using the blister packaging multilayer resin films of the invention, the side of the oxygen barrier layer is arranged to face the support substrate. The blister packaging multilayer resin films generally have an oxygen permeability of not more than 15 $cm^3/m^2 \cdot day \cdot atm$, and preferably not more than 10 $cm^2 \cdot day \cdot atm$, the oxygen permeating from a side of the multilayer rein film not facing the support substrate (an outer side) to a side thereof facing the support substrate (an inner side), as measured under conditions in which the temperature and humidity are 40°C and 0% RH on the side of the multilayer resin film facing the support substrate (the inner side) and the temperature and humidity are 40°C and 75% RH on the side not facing the support substrate (the outer side), The oxygen permeability in the above range ensures excellent oxygen barrier properties. Lower oxygen permeability is more preferred, and the lower limit thereof is not particularly limited. But the oxygen permeability of the blister packaging multilayer resin films with oxygen barrier properties according to the invention is not less than 0.1 $cm^3/m^2 \cdot day \cdot atm$.

Here, the side not facing the support substrate (the outer side) refers to a side of the film which will be exposed to air when the film is formed into a blister package, and the side facing the support substrate (the inner side) refers to a side of the film which will be in contact with the support substrate or a packaged item.

(Processes for producing blister packaging multilayer resin films)

The blister packaging multilayer resin films of the invention may be produced by any processes without limitation. Usually, they are manufactured by laminating the oxygen barrier resin film and the moisture proof resin film. When any layers other than the oxygen barrier layer, the moisture proof layer and the adhesive layer are used, the multilayer resin films may be manufactured by laminating the layers including such other layers.

The laminating methods are not particularly limited. For example, the oxygen barrier resin film and the moisture proof resin film may be produced separately and be laminated together through an adhesive layer. Alternatively, the oxygen barrier layer and the moisture proof layer may be laminated simultaneously with the production of the layers.

The oxygen barrier resin films and the moisture proof resin films may be prepared by usual multilayer sheet or film production methods, with examples including co-extrusion methods such as multilayer T die extrusion and multilayer blown-film extrusion, extrusion coating methods, dry lamination methods, heat lamination methods, casting methods such as wet casting and dry casting, and calendering methods. The oxygen barrier resin films and the moisture proof resin films produced by these methods may be laminated together by the laminating methods to give the blister packaging multilayer resin films according to the present invention.

In an embodiment, the oxygen barrier layer and the moisture proof layer may be laminated together directly to give the blister packaging multilayer resin film of the invention. In this embodiment, the oxygen barrier layer and the moisture proof layer may be formed by usual multilayer film production methods, with examples including co-extrusion methods such as multilayer T die extrusion and multilayer blown-film extrusion, extrusion coating methods, dry lamination methods, heat lamination methods, casting methods such as wet casting and dry casting, and calendering methods.

In particular, the blister packaging multilayer resin films of the invention are preferably unstretched sheets in order to prevent warpage of the blister packages after the formation of pockets. From the viewpoint of low production costs, extrusion coating methods by multilayer T die extrusion or co-extrusion methods by the same technique are desired. Dry lamination of the oxygen barrier resin film and the moisture proof resin film is also effective in costs.

(Blister packages)

The blister packages of the invention contain a support substrate and the multilayer resin film described above, and have a pocket for sealing an item between the support substrate and the multilayer resin film. The support substrate and the multilayer resin film are fusion bonded together such that the oxygen barrier layer of the multilayer resin film is arranged on a side which faces the support substrate, and the moisture proof layer is arranged on a side which does not face the support substrate.

Usually, the support substrate and the multilayer resin film are fusion bonded together after an item is placed in the pocket.

The blister packages of the invention have the blister packaging multilayer resin films as described above. The blister packaging multilayer resin films have a low oxygen permeability, the oxygen permeating from the side not facing the support substrate (the outer side) to the side facing the support substrate (the inner side), as measured under conditions in which the temperature and humidity are 40°C and 0% RH on the side of the multilayer resin film facing the support substrate (the inner side) and the temperature and humidity are 40°C and 75% RH on the side not facing the support substrate (the outer side). The blister packages having the films are suitably used to package items that are reactive with oxygen.

In particular, the blister packages of the invention are preferably press-through packages for packaging drugs such as tablets or capsules.

Because of the low oxygen permeability, the blister packages of the invention are suitably used to package items such as drugs that are readily reactive with oxygen.

(Support substrates)

Examples of the support substrates in the blister packages include aluminum metal foils, aluminum-deposited or silica-deposited resin films, and alumina-deposited oxygen impermeable or vapor impermeable films, with aluminum metal foils being particularly preferable. Since aluminum has poor heat sealability with the multilayer resin films, the aluminum metal foils (hereinafter, also the aluminum foils) used in the invention usually have a resin layer having excellent heat sealing properties (hereinafter, also the heat sealable resin layer).

Similarly in the support substrates other than the aluminum foils, a heat sealable resin layer is preferably provided on the joint surface of the support substrates with the multilayer resin film in order to achieve higher adhesion with the multilayer resin film.

In order to reduce the amount of oxygen permeating through the support substrate, the aluminum foils or metal-deposited gas impermeable substrate films are preferably used.

(Methods of manufacturing blister packages)

The blister packages of the invention may be manufactured by various methods. For example, the multilayer resin film may be sandwiched between a lower mold having a hole for supplying high-temperature and high-pressure air and an upper mold having a pocket-shaped cavity, and the multilayer resin film may be softened by heat while being pressed to the pocket shape by the air blown thereinto (thermal pressure forming method). Alternatively, the multilayer resin film may be softened by heat and then sandwiched between a lower mold having a hole for supplying high-pressure air and an upper mold having a pocket-shaped cavity, and the air may be blown thereinto to create a pocket (preheating flat-plate pressure forming method). Still alternatively, the multilayer resin film may be partially softened on a heating drum with a pocket-shaped cavity and a vacuum may be drawn through the cavity to create a pocket (drum vacuum forming method). Alternatively, the multilayer resin film may be softened by heat and then pressed with a mold having a pocket-shaped bump/dip (pin forming method). Still alternatively, the multilayer resin film may be softened by heat and then sandwiched between a lower mold having a hole for supplying high-pressure air and an upper mold having a pocket-shaped cavity, and the air may be blown thereinto to form a pocket while a convex plug is ascended and descended to assist the pocket formation (preheating plug-assist pressure forming method).

The films according to the invention may be shaped without failure by not only vacuum forming but also pressure forming. Accordingly, pressure forming methods such as the flat-plate pressure forming and the plug-assist pressure forming may be adopted in the invention.

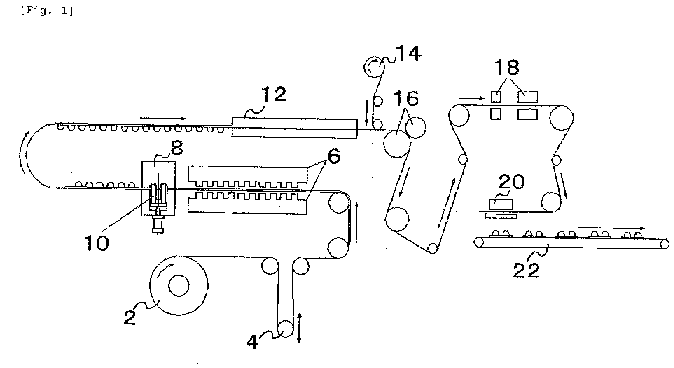

In an embodiment, the blister packages of the invention may be fabricated by a preheating plug-assist pressure forming method including the steps I to VII as illustrated in Fig. 1.

I: The blister packaging multilayer resin film is rolled into a raw film roll (2), and the sheet is fed from the roll (2) through an accumulator (4).

II: The sheet that is fed is delivered to a contact heating plate (6), and areas that will form pockets in the obtainable blister packages are heated.

III: The heated sheet is then delivered to a mold (8) in which pockets are formed by plug-assist pressure forming with use of a plug (10). In the plug-assist pressure forming, the plug is brought into contact with the sheet on the oxygen barrier layer side.

IV: Items such as tablets or capsules are fed via a part feeder (12) into the pockets. The items such as tablets are inspected for cracks, breakage, contamination or foreign matters through a camera or the like.

V: The sheet is bonded with a support substrate (aluminum foil) (14) by a fusion bonding roll (16).

VI: Where necessary, marks are stamped at a mark stamping unit (18).

VII: The sheet is cut to a predetermined size at a cutting/punching unit, and the packages are delivered outside the production line through a belt conveyer (22).

Through the steps I to VII, the blister packages of the invention may be manufactured. The blister packages have the moisture proof layer arranged outside the oxygen barrier layer, in other words, the moisture proof layer is located on a side close to the outside air. This constitution reduces the influence of outside moisture on the oxygen barrier layer, and excellent oxygen barrier properties are achieved.

The shape, size, depth, number and arrangement of the pockets in the blister packages may be determined appropriately depending on the size or application of the items packaged therein.

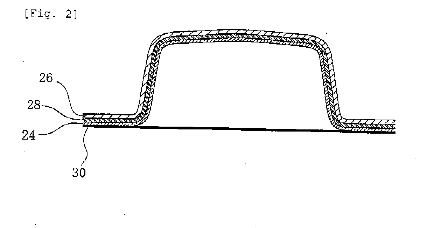

Fig. 2 is a schematic view of the multilayer constitution according to an embodiment of the blister packages of the invention. As illustrated in Fig. 2, a moisture proof layer (26) is arranged outside (closer to the outside air than) an oxygen barrier layer (24), and consequently the blister package is hardly affected by moisture and achieve excellent oxygen barrier properties. In Fig. 2, an adhesive layer (28) is provided between the moisture proof layer (26) and the oxygen barrier layer (24). The adhesive layer (28) is, however, an optional layer as described hereinabove.

An aspect of the invention is directed to inhibiting the permeation of oxygen into blister packages. Specifically, in blister packages that comprise a support substrate and a multilayer resin film comprising an oxygen barrier layer and a moisture proof layer and have a pocket for sealing an item between the support substrate and the multilayer resin film, a method of inhibiting the oxygen permeation is provided wherein the oxygen barrier layer is arranged on a side of the multilayer resin film which side faces the support substrate, and the moisture proof layer is arranged on a side of the oxygen barrier layer which side does not face the support substrate. In the method, the multilayer resin film is the blister packaging multilayer resin film as described hereinabove.

EXAMPLES

The present invention will be described in greater detail hereinbelow without limiting the scope of the invention.
In Examples, properties were measured as described below.

(1) Oxygen permeability

The oxygen permeability of blister packaging multilayer resin films was determined in accordance with the method B described in JIS K 7126 using an oxygen permeability tester (OX-TRAN 2/20 manufactured by Modern Control Inc.). The testing temperature was 40°C, the testing humidity was 75% RH before permeation (oxygen side) and 0% RH after permeation (nitrogen side), the permeation area was 50 cm$^2$, and the testing gas was 100% oxygen.
The oxygen permeability was measured with the moisture proof resin film on the oxygen side and the oxygen barrier resin film on the nitrogen side. As a reference, the oxygen permeability was measured with the oxygen barrier resin film on the oxygen side and the moisture proof resin film on the nitrogen side.
The oxygen permeability of blister packaging multilayer resin films (1) to (4) is set forth in Table 1.

(2) Evaluation of forming properties

Forming properties of the multilayer resin film into a blister package were evaluated by shaping the film using a press-through packaging (PTP) apparatus (FBP-M1 manufactured by CKD Corporation) which had a mold for creating 11.5 diameter x 5.3 height tablet pockets (11.5 mm in diameter and 5.3 mm in depth). In detail, the film was heated with a pinpoint heating plate and then shaped with a plug-assist mechanism, and the followability to the mold shape (unevenness in appearance at ceilings, corners and sides of the pockets) as well as curling properties were evaluated. The appearance was evaluated comprehensively taking in consideration the sealing properties with an aluminum foil support substrate.
The forming properties of blister packages (1-1) to (4-1) and (C1-1) to (C4-1) are set forth in Table 2.
The followability to the mold shape was evaluated by visual inspection for uneven appearance at ceilings, corners and sides of the pockets.
The curling properties were evaluated based on the degree of warpage in the middle along the width direction of the sheet after the pocket formation and before the cutting/punching of the sheet.
After the pockets were created as described above, the sheet was sealed with an aluminum foil without containing items. Slits were formed, and the sheet was punched to give packages having a width of 50 mm, a length of 108 mm and a corner radius of 5 mm. The sealing properties with the aluminum foil support substrate were visually evaluated based on the development of dice patterns that were joints of the sheet with the aluminum foil.

(3) Moisture proof performance

The moisture proof performance was evaluated as follows.
The blister packaging multilayer resin film was shaped using a press-through packaging (PTP) apparatus (FBP-M1 manufactured by CKD Corporation) which had a mold for creating 11.5 diameter x 5.3 height tablet pockets (11.5 mm in diameter and 5.3 mm in depth). In detail, the film was heated with a pinpoint heating plate and then shaped with a plug-assist mechanism. Each pocket received 120 mg of silica gel (a mixture of spherical A-type gels, 10-20, manufactured by FUJI SILYSIA CHEMICAL LTD.) that had been dried at 150°C for 2 hours and gradually cooled. The sheet was sealed with an aluminum foil, and slits were formed. The sheet was punched to give press-through packages having a width of 50 mm, a length of 108 mm and a corner radius of 5 mm. The packages were then cut with scissors with respect to each pocket. Ten test pieces (ten pockets) containing the silica gel, and five blanks (five pockets) not containing the silica gel were thus prepared.

The test pieces and the blanks were each measured on an electronic balance (AT261 manufactured by Mettler-Toledo International Inc.) to an accuracy of 0.01 mg, and initial weights were obtained. The test pieces and the blanks were placed on a stainless steel mesh dish and were stored in a thermo-hygrostat previously set at 40°C and 75% RH. After the passage of a predetermined time, they were removed from the thermo-hygrostat and gradually cooled under room temperature conditions. After 1 hour after the test pieces and the blanks were removed from the thermo-hygrostat, they were measured on the electronic balance to an accuracy of 0.01 mg. Immediately after the weight measurement, the test pieces and the blanks were returned to the thermo-hygrostat. These procedures were repeated several times. The permeated moisture amount and the moisture permeation rate were calculated from the test results according to the following equations.

$$\text{Permeated moisture amount (mg) = average of (weight change (mg) - blank weight (mg))}$$

$$\text{Moisture permeation rate (mg/days) = permeated moisture amount/exposure days}$$

The results are set forth in Table 3.

[Example 1]

A blister packaging multilayer resin film (1) (total thickness: 349 $\mu$m) was manufactured by dry laminating a moisture proof resin film (a co-extruded multilayer film consisting of polypropylene (30 $\mu$m)/petroleum resin-modified polypropylene (240 $\mu$m)/polypropylene (30 $\mu$m) (TAS-2230V manufactured by Taisei Kako Co., Ltd.)) and an oxygen barrier resin film (a blown extruded multilayer film consisting of polyethylene (15 $\mu$m)/ethylene vinyl alcohol copolymer (5 $\mu$m)/polyethylene (15 $\mu$m) (Multitoron X6-G203D manufactured by TAMAPOLY CO., LTD.)) through a polyester adhesive (TAKELAC manufactured by Takeda Pharmaceutical Company Limited) at a temperature of 80°C.

The moisture proof resin film (TAS-2230V manufactured by Taisei Kako Co., Ltd.) had a moisture permeability of 0.59 [g/m$^2$·day] as measured at 40°C and 90% RH in accordance with JIS Z 0208.

The oxygen barrier resin film (Multitoron X6-G203D manufactured by TAMAPOLY CO., LTD.) had an oxygen permeability of 21.1 [cm$^3$/m$^2$·day.atm] and a permeability coefficient of 1.29 x 10$^{-12}$ [cm$^3$·cm/cm$^2$·s·cm Hg] as determined in accordance with the method B described in JIS K 7126 using an oxygen permeability tester (OX-TRAN 2/20 manufactured by Modern Control Inc.) at a testing temperature of 40°C and a testing humidity of 75% RH before permeation (oxygen side) and 75% RH after permeation (nitrogen side), with the permeation area being 50 cm$^2$ and the testing gas being 100% oxygen.

[Example 2]

A blister packaging multilayer resin film (2) (total thickness: 367 $\mu$m) was manufactured by dry laminating a moisture proof resin film (a co-extruded multilayer film consisting of polypropylene (30 $\mu$m)/petroleum resin-modified polypropylene (240 $\mu$m)/polypropylene (30 $\mu$m) (TAS-2230V manufactured by Taisei Kako Co., Ltd.)) and an oxygen barrier resin film (a blown extruded multilayer film consisting of polypropylene (26 $\mu$m)/ethylene vinyl alcohol copolymer (7 $\mu$m)/polypropylene (26 $\mu$m) (Multitoron X7-B204D manufactured by TAMAPOLY CO. , LTD.)) through a polyester adhesive (TAKELAC manufactured by Takeda Pharmaceutical Company Limited) at a temperature of 80°C.

The oxygen barrier resin film (Multitoron X7-B204D manufactured by TAMAPOLY CO. , LTD.) had an oxygen permeability of 20.8 [cm$^3$/m$^2$·day·atm] and a permeability coefficient of 1.77 x 10$^{-12}$ [cm$^3$·cm/cm$^2$·s·cm Hg] as determined in accordance with the method B described in JIS K 7126 using an oxygen permeability tester (OX-TRAN 2/20 manufactured by Modern Control Inc.) at a testing temperature of 40°C and a testing humidity of 75% RH before permeation (oxygen side) and 75% RH after permeation (nitrogen side), with the permeation area being 50 cm$^2$ and the testing gas being 100% oxygen.

[Example 3]

A blister packaging multilayer resin film (3) (total thickness: 329 $\mu$m) was manufactured by dry laminating a moisture proof resin film (a dry laminated multilayer film consisting of polypropylene (30 $\mu$m)/adhesive (5 $\mu$m)/cyclic olefin resin (235 $\mu$m)) and an oxygen barrier resin film (a blown extruded multilayer film consisting of polypropylene (26 $\mu$m)/ethylene vinyl alcohol copolymer (7 $\mu$m)/polypropylene (26 $\mu$m) (Multitoron X7-B204D manufactured by TAMAPOLY CO., LTD.)) through a polyester adhesive (TAKELAC manufactured by Takeda Pharmaceutical Company Limited) at a temperature of 80°C.
The moisture proof resin film (the dry laminated multilayer film consisting of polypropylene (30 $\mu$m)/adhesive (5 $\mu$m)/cyclic olefin resin (235 $\mu$m)) had a moisture permeability of 0.30 [g/m$^2$·day] as measured at 40°C and 90% RH in accordance with JIS Z 0208 (in the cup tested herein, the polypropylene was on the outer side and the cyclic olefin resin was on the inner side).

[Example 4]

A blister packaging multilayer resin film (4) (total thickness: 394 $\mu$m) was manufactured by dry laminating a moisture proof resin film (a co-extruded multilayer film consisting of polypropylene (30 $\mu$m)/petroleum resin-modified polypropylene (240 $\mu$m)/polypropylene (30 $\mu$m) (TAS-2230V manufactured by Taisei Kako Co., Ltd.)) and an oxygen barrier resin film (polyacrylonitrile (40 $\mu$m)/adhesive (8 $\mu$m)/polypropylene (26 $\mu$m)) through a polyester adhesive (TAKELAC manufactured by Takeda Pharmaceutical Company Limited) at a temperature of 80°C.
The oxygen barrier resin film (polyacrylonitrile (40 $\mu$m)/adhesive (8 $\mu$m)/polypropylene (26 $\mu$m)) had an oxygen permeability of 21.8 [cm$^3$/m$^2$·day·atm] and a permeability coefficient of 2.06 x 10$^{-12}$ [cm$^3$.cm/cm$^2$·s·cm Hg] as determined in accordance with the method B described in JIS K 7126 using an oxygen permeability tester (OX-TRAN 2/20 manufactured by Modern Control Inc.) at a testing temperature of 40°C and a testing humidity of 75% RH before permeation (oxygen side) and 75% RH after permeation (nitrogen side), with the permeation area being 50 cm$^2$, the testing gas being 100% oxygen, the polyacrylonitrile being on the pre-permeation side, and the polypropylene being on the post-permeation side.
The polyacrylonitrile (40 $\mu$m) in the oxygen barrier resin film was Hitoron BX (manufactured by TAMAPOLY CO. , LTD.). The polyacrylonitrile (40 $\mu$m) and the polypropylene (26 $\mu$m) were dry laminated to give the oxygen barrier resin film (polyacrylonitrile (40 $\mu$m)/adhesive (8 $\mu$m)/polypropylene (26 $\mu$m)).

[Example 5]

The blister packaging multilayer resin film (1) from Example 1 was heated to 138°C with a pinpoint heating plate and was shaped using a press-through packaging (PTP) apparatus (FBP-M1 manufactured by CKD Corporation) which had a mold for creating 11.5 diameter x 5.3 height tablet pockets (11.5 mm in diameter and 5.3 mm in depth). Here, the film was shaped by plug-assist forming in which a plug was raised against the oxygen barrier resin film at a plug temperature of 135°C.
An aluminum foil (20 $\mu$m) as a liner layer was laid on the top surface (the oxygen barrier resin film side) of the blister packaging multilayer resin film (1) with the pockets. (The aluminum foil was coated with a low temperature fusion bonding resin, and the resin-coated side was in contact with the multilayer film.) The two films were fusion bonded (at 220°C) to give a blister package (1-1).
Separately, each pocket of another blister packaging multilayer resin film (1) received 120 mg of silica gel (a mixture of spherical A-type gels, 10-20, manufactured by FUJI SILYSIA CHEMICAL LTD.), and an aluminum foil (20 $\mu$m) as a liner layer was laid on the top surface (the oxygen barrier resin film side) of the blister packaging multilayer resin film with the pockets. (The aluminum foil was coated with a low temperature fusion bonding resin, and the resin-coated side was in contact with the multilayer film.) The two films were fusion bonded (at 220°C) to give a blister package (1-2).

[Comparative Example 1]

The blister packaging multilayer resin film (1) from Example 1 was heated to 138°C with a pinpoint heating plate and was shaped using a press-through packaging (PTP) apparatus (FBP-M1 manufactured by CKD Corporation) which had a mold for creating 11.5 diameter x 5.3 height tablet pockets (11.5 mm in diameter and 5.3 mm in depth). Here, the film was shaped by plug-assist forming in which a plug was raised against the moisture proof resin film at a plug temperature of 135°C.
An aluminum foil (20 $\mu$m) as a liner layer was laid on the top surface (the moisture proof resin film side) of the blister packaging multilayer resin film (1) with the pockets. (The aluminum foil was coated with a low temperature fusion bonding resin, and the resin-coated side was in contact with the multilayer film.) The two films were fusion bonded (at 220°C) to give a blister package (C1-1).

Separately, each pocket of another blister packaging multilayer resin film (1) received 120 mg of silica gel (a mixture of spherical A-type gels, 10-20, manufactured by FUJI SILYSIA CHEMICAL LTD.), and an aluminum foil (20 μm) as a liner layer was laid on the top surface (the moisture proof resin film side) of the blister packaging multilayer resin film with the pockets. (The aluminum foil was coated with a low temperature fusion bonding resin, and the resin-coated side was in contact with the multilayer film.) The two films were fusion bonded (at 220°C) to give a blister package (C1-2).

[Example 6]

Blister packages (2-1) and (2-2) were manufactured in the same manner as in Example 5, except that the blister packaging multilayer resin film (1) used in Example 5 was changed to the blister packaging multilayer resin film (2).

[Comparative Example 2]

Blister packages (C2-1) and (C2-2) were manufactured in the same manner as in Comparative Example 1, except that the blister packaging multilayer resin film (1) used in Comparative Example 1 was changed to the blister packaging multilayer resin film (2).

[Example 7]

The blister packaging multilayer resin film (3) from Example 3 was heated to 125°C with a pinpoint heating plate and was shaped using a press-through packaging (PTP) apparatus (FBP-M1 manufactured by CKD Corporation) which had a mold for creating 11.5 diameter x 5.3 height tablet pockets (11.5 mm in diameter and 5.3 mm in depth). Here, the film was shaped by plug-assist forming in which a plug was raised against the oxygen barrier resin film at a plug temperature of 122°C.

An aluminum foil (20 μm) as a liner layer was laid on the top surface (the oxygen barrier resin film side) of the blister packaging multilayer resin film (3) with the pockets. (The aluminum foil was coated with a low temperature fusion bonding resin, and the resin-coated side was in contact with the multilayer film.) The two films were fusion bonded (at 220°C) to give a blister package (3-1).

Separately, each pocket of another blister packaging multilayer resin film (3) received 120 mg of silica gel (a mixture of spherical A-type gels, 10-20, manufactured by FUJI SILYSIA CHEMICAL LTD.), and an aluminum foil (20 μm) as a liner layer was laid on the top surface (the oxygen barrier resin film side) of the blister packaging multilayer resin film with the pockets. (The aluminum foil was coated with a low temperature fusion bonding resin, and the resin-coated side was in contact with the multilayer film.) The two films were fusion bonded (at 220°C) to give a blister package (3-2).

[Comparative Example 3]

The blister packaging multilayer resin film (3) from Example 3 was heated to 125°C with a pinpoint heating plate and was shaped using a press-through packaging (PTP) apparatus (FBP-M1 manufactured by CKD Corporation) which had a mold for creating 11.5 diameter x 5.3 height tablet pockets (11.5 mm in diameter and 5.3 mm in depth). Here, the film was shaped by plug-assist forming in which a plug was raised against the moisture proof resin film at a plug temperature of 122°C.

An aluminum foil (20 μm) as a liner layer was laid on the top surface (the moisture proof resin film side) of the blister packaging multilayer resin film (3) with the pockets. (The aluminum foil was coated with a low temperature fusion bonding resin, and the resin-coated side was in contact with the multilayer film.) The two films were fusion bonded (at 220°C) to give a blister package (C3-1).

Separately, each pocket of another blister packaging multilayer resin film (3) received 120 mg of silica gel (a mixture of spherical A-type gels, 10-20, manufactured by FUJI SILYSIA CHEMICAL LTD.), and an aluminum foil (20 μm) as a liner layer was laid on the top surface (the moisture proof resin film side) of the blister packaging multilayer resin film with the pockets. (The aluminum foil was coated with a low temperature fusion bonding resin, and the resin-coated side was in contact with the multilayer film.) The two films were fusion bonded (at 220°C) to give a blister package (C3-2).

[Example 8]

Blister packages (4-1) and (4-2) were manufactured in the same manner as in Example 7, except that the blister packaging multilayer resin film (1) used in Example 5 was changed to the blister packaging multilayer resin film (4).

[Comparative Example 4]

Blister packages (C4-1) and (C4-2) were manufactured in the same manner as in Comparative Example 3, except that the blister packaging multilayer resin film (1) used in Comparative Example 1 was changed to the blister packaging multilayer resin film (4).

[Table 1]

| Measurement sample | Before permeation (oxygen side) 75% RH | After permeation (nitrogen side) 0% RH | Permeability [cm$^3$/m$^2$·day·atm] | permeability coefficient [cm$^3$·cm/cm$^2$·s·cm Hg] |
|---|---|---|---|---|
| Blister packaging multilayer resin film (1) | Moisture proof resin film | Oxygen barrier resin film | 3.51 | $1.87 \times 10^{-12}$ |
| | Oxygen barrier resin film | Moisture proof resin film | 15.9 | $8.40 \times 10^{-12}$ |
| Blister packaging multilayer resin film (2) | Moisture proof resin film | Oxygen barrier resin film | 2.21 | $1.24 \times 10^{-12}$ |
| | Oxygen barrier resin film | Moisture proof resin film | 20 | $1.14 \times 10^{-11}$ |
| Blister packaging multilayer resin film (3) | Moisture proof resin film | Oxygen barrier resin film | 2.57 | $1.29 \times 10^{-12}$ |
| | Oxygen barrier resin film | Moisture proof resin film | 20.6 | $1.04 \times 10^{-11}$ |
| Blister packaging multilayer resin film (4) | Moisture proof resin film | Oxygen barrier resin film | 12.9 | $5.64 \times 10^{-12}$ |
| | Oxygen barrier resin film | Moisture proof resin film | 21.6 | $9.54 \times 10^{-12}$ |

[Table 2]

| Measurement sample | Heat sealing properties with aluminum foil |
|---|---|
| Blister package (1-1) | Good |
| Blister package (C1-1) | Good |
| Blister package (2-1) | Good |
| Blister package (C2-1) | Good |
| Blister package (3-1) | Good |
| Blister package (C3-1) | Good |
| Blister package (4-1) | Good |
| Blister package (C4-1) | Good |

[Table 3]

| Measurement sample | Moisture permeation rate (mg/pocket·day) |
|---|---|
| Blister package (1-2) | 0.15 |
| Blister package (C1-2) | 0.14 |
| Blister package (2-2) | 0.15 |
| Blister package (C2-2) | 0.15 |
| Blister package (3-2) | 0.14 |
| Blister package (C3-2) | 0.15 |
| Blister package (4-2) | 0.17 |
| Blister packages (C4-2) | 0.16 |

**Claims**

1. A blister packaging multilayer resin film used to produce a blister package in which an item is sealed between a support substrate and the multilayer resin film, wherein:

   the multilayer resin film comprises an oxygen barrier layer that is arranged on a side of the multilayer resin film which side faces the support substrate, and
   a moisture proof layer that is arranged on a side of the oxygen barrier layer which side does not face the support substrate.

2. A blister packaging multilayer resin film used to produce a blister package in which an item is sealed between a support substrate and the multilayer resin film, wherein:

   the multilayer resin film comprises an oxygen barrier layer that is arranged on a side of the multilayer resin film which side faces the support substrate, and
   a moisture proof layer that is arranged on a side of the oxygen barrier layer which side does not face the support substrate; and
   the multilayer resin film has an oxygen permeability of not more than 15 $CM^3/m^2$·day·atm, the oxygen permeating from a side of the multilayer resin film not facing the support substrate (an outer side) to a side thereof facing the support substrate (an inner side), as measured under conditions in which the temperature and humidity are 40°C and 0% RH on the side of the multilayer resin film facing the support substrate (the inner side) and the temperature and humidity are 40°C and 75% RH on the side not facing the support substrate (the outer side) .

3. The blister packaging multilayer resin film according to claim 1 or 2, wherein the oxygen barrier layer comprises at least one layer selected from the group consisting of ethylene/vinyl alcohol copolymer layers and polyacrylonitrile layers.

4. The blister packaging multilayer resin film according to any one of claims 1 to 3, wherein the moisture proof layer comprises at least one layer selected from the group consisting of petroleum resin-modified polypropylene layers, cyclic olefin resin layers, 100-400 $\mu$m thick polypropylene layers and polychlorotrifluoroethylene layers.

5. The blister packaging multilayer resin film according to any one of claims 1 to 4, wherein the oxygen barrier layer is formed of an oxygen barrier resin film and the moisture proof layer is formed of a moisture proof resin film.

6. The blister packaging multilayer resin film according to claim 5, wherein the oxygen barrier resin film forming the oxygen barrier layer has an oxygen permeability of not more than 100 $cm^3/m^2$·day·atm as measured at 40°C and 75% RH, and the moisture proof resin film forming the moisture proof layer has a moisture permeability of not more than 1.0 $g/m^2$·day as measured at 40°C and 90% RH.

7. The blister packaging multilayer resin film according to claim 5 or 6, wherein the oxygen barrier resin film comprises at least one resin film selected from the group consisting of polyolefin layer/ethylene vinyl alcohol copolymer layer/ polyolefin layer multilayer films, polyacrylonitrile layer/adhesive layer/polyolefin layer multilayer films, polyolefin layer/adhesive layer/polyacrylonitrile layer/adhesive layer/polyolefin layer multilayer films, and polyacrylonitrile layer/ adhesive layer/polyolefin layer/ethylene vinyl alcohol copolymer layer/polyolefin layer multilayer films.

8. The blister packaging multilayer resin film according to any one of claims 5 to 7, wherein the moisture proof resin film comprises at least one film selected from the group consisting of polypropylene layer/petroleum resin-modified polypropylene layer/polypropylene layer multilayer films, polypropylene layer/adhesive layer/cyclic olefin resin layer multilayer films, 100-400 $\mu$m thick polypropylene single layer films, polychlorotrifluoroethylene layer/adhesive layer/ polypropylene layer/petroleum resin-modified polypropylene layer/polypropylene layer multilayer films, polychlorotrifluoroethylene layer/adhesive layer/polypropylene layer/adhesive layer/cyclic olefin resin layer multilayer films, polychlorotrifluoroethylene layer/adhesive layer/cyclic olefin resin layer multilayer films, polychlorotrifluoroethylene layer/polypropylene layer multilayer films, polypropylene layer/adhesive layer/polychlorotrifluoroethylene layer/adhesive layer/polypropylene layer multilayer films, and polychlorotrifluoroethylene layer/adhesive layer/polypropylene layer multilayer films.

9. The blister packaging multilayer resin film according to any one of claims 1 to 8, wherein the oxygen barrier layer has a thickness of 1 to 100 $\mu$m, the moisture proof layer has a thickness of 100 to 400 $\mu$m, and the thickness of the blister packaging multilayer resin film is in the range of 200 to 500$\mu$ m.

10. The blister packaging multilayer resin film according to any one of claims 1 to 9, which further comprises an ultraviolet absorbing layer.

11. The blister packaging multilayer resin film according to any one of claims 1 to 10, wherein the moisture proof layer and/or the oxygen barrier layer contains an ultraviolet absorber.

12. The blister packaging multilayer resin film according to any one of claims 1 to 11, which further comprises a light shielding layer.

13. The blister packaging multilayer resin film according to any one of claims 1 to 12, wherein the moisture proof layer and/or the oxygen barrier layer contains a light shielding material.

14. The blister packaging multilayer resin film according to any one of claims 1 to 13, wherein the blister package is a press-through package.

15. A blister package comprising a support substrate and the multilayer resin film according to any one of claims 1 to 14, the blister package having a pocket for sealing an item between the support substrate and the multilayer resin film, the support substrate and the multilayer resin film being fusion bonded together such that the oxygen barrier layer is arranged on a side of the multilayer resin film which side faces the support substrate, and the moisture proof layer is arranged on a side which does not face the support substrate.

16. The blister package according to claim 15, wherein the support substrate is an aluminum metal foil.

17. The blister package according to claim 15 or 16, wherein the support substrate has a heat sealable resin layer on a joint surface with the multilayer resin film.

18. The blister package according to any one of claims 15 to 17, which is a press-through package.

19. The blister package according to any one of claims 15 to 18, wherein an item is sealed in the package.

20. In blister packages that comprise a support substrate and a multilayer resin film comprising an oxygen barrier layer and a moisture proof layer and have a pocket for sealing an item between the support substrate and the multilayer resin film, a method of inhibiting the permeation of oxygen into the blister packages by arranging the oxygen barrier layer on a side of the multilayer resin film which side faces the support substrate, and the moisture proof layer on a side of the oxygen barrier layer which side does not face the support substrate.

[Fig. 1]

[Fig. 2]

26

28

24

30

## INTERNATIONAL SEARCH REPORT

| | International application No. |
|---|---|
| | PCT/JP2008/060907 |

**A. CLASSIFICATION OF SUBJECT MATTER**
*B32B27/00(2006.01)i, B65D65/40(2006.01)i, B65D75/36(2006.01)i, B65D83/04 (2006.01)i*

According to International Patent Classification (IPC) or to both national classification and IPC

**B. FIELDS SEARCHED**

Minimum documentation searched (classification system followed by classification symbols)
*B32B1/00-43/00(2006.01)i, B65D65/40(2006.01)i, B65D75/36(2006.01)i, B65D83/04(2006.01)i*

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 59-026466 A  (Shionogi & Co., Ltd.),<br>10 February, 1984 (10.02.84),<br>Claims; page 2, lower left column, lines 11 to 16; page 2, lower right column, line 3 to page 3, upper left column, line 10<br>(Family: none) | 1,3-6,8-20<br>2,7 |
| Y | JP 2001-287277 A  (The Nippon Synthetic Chemical Industry Co., Ltd.),<br>16 October, 2001 (16.10.01),<br>Examples<br>& EP 990514 A1          & JP 2000-167998 A<br>& JP 2000-168008 A       & JP 2001-277352 A<br>& JP 2001-277371 A       & JP 2001-287276 A<br>& US 6383583 B1 | 2 |

| ☒ Further documents are listed in the continuation of Box C. | ☐ See patent family annex. |
|---|---|

| \* | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>16 September, 2008 (16.09.08) | Date of mailing of the international search report<br>30 September, 2008 (30.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/060907

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-168008 A (The Nippon Synthetic Chemical Industry Co., Ltd.),<br>20 June, 2000 (20.06.00),<br>Par. Nos. [0011], [0012]<br>& EP 990514 A1 & JP 2000-167998 A<br>& JP 2001-277352 A & JP 2001-277371 A<br>& JP 2001-287276 A & JP 2001-287277 A<br>& US 6383583 B1 | 7 |
| A | JP 2001-328211 A (Nippon Zeon Co., Ltd.),<br>27 November, 2001 (27.11.01),<br>Claims<br>(Family: none) | 1-20 |
| A | JP 2005-263287 A (Taisei Kako Co., Ltd.),<br>29 September, 2005 (29.09.05),<br>Claims<br>(Family: none) | 1-20 |
| A | JP 2006-346888 A (Kyodo Printing Co., Ltd.),<br>28 December, 2006 (28.12.06),<br>Claims<br>(Family: none) | 1-20 |
| A | JP 2003-063559 A (Toppan Printing Co., Ltd.),<br>05 March, 2003 (05.03.03),<br>Claims<br>(Family: none) | 1-20 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006063231 A